# EUROPEAN PATENT APPLICATION

(11) **EP 1 667 142 A2**
(43) Date of publication of application: **07.06.2006**
(21) Application number: 05257303.7
(22) Date of filing: 28.11.2005
(51) Int. Cl.: G11B 19/00

(54) **Disk reproduction apparatus**

(30) Priority: 29.11.2004 JP 2004343963
(71) Applicant: ORION ELECTRIC CO., Ltd., Fukui 915-8555 (JP)
(72) Inventor: Hiranabe, Yoshiyuki, c/o Intellectual Property Dpt, Echizen-city Fukui 915-8555 (JP)
(74) Representative: Paget, Hugh Charles Edward

(57) **Abstract**

To provide a disk reproduction apparatus capable of reducing time required for reading a disk medium and making a retry. When a type of a disk is discriminated by making a retry because the disk cannot be read at the first time of loading, a user selects in advance one of a fixing method of setting types of disk media to be discriminated and a discriminating order thereof and a historical data method of automatically setting the order of discriminating disk media in the order of decreasing frequency of reproduction, on the basis of historical data of reproduction frequency for each type of disk media. The historical data method is selectable from an addition method and a calculation method. The historical data is visually recognizable by displaying it. A user can select a method which requires less reading processing time, through selecting a discriminating method and making each setting.

## Description

### BACKGROUND OF THE INVENTION

### Field of the Invention

The present invention relates to a disk reproduction apparatus which is capable of reproducing a plurality of types of disks and is also capable of reading and reproducing a disk by determining a type of the disk medium through a retry operation when the disk cannot be read at the first time of loading.

### Description of the Related Art

A conventional retry-capable disk reproduction apparatus is disclosed, for example, in Japanese Patent Laid-Open Publication No. 2001-43609 (patent document 1). For an improvement of disk discrimination accuracy and speed, this apparatus ascertains a disk designation after a disk is inserted, and when the disk cannot be reproduced at the first time of disk discriminating operation, this apparatus selects types of disks one by one on the basis of previous reproduction history to reduce the time for reproduction. The reproduction history is made according to an addition method in which data updating is performed repetitively.

The above conventional art has some disadvantages.

In the case where the order of priority for discriminating the type of a disk is determined based on the reproduction history according to the addition method, frequent use of a disk medium for a certain period of time reduces the possibility that a user-desired type of disk which has hardly been used is discriminated preferentially, and accordingly it takes time for reproduction. For example, a large volume of historical data of a single-layer DVD has already been added because the single-layer DVD out of several disk media was frequently used a year ago, and when a double-layer DVD starts to be used recently in the above state, the single-layer DVD is discriminated first until the amount of historical data of the double-layer DVD exceeds that of the single-layer DVD.

Furthermore, when the order of priority for discriminating a disk type is determined based only on the historical data, a change in user's preferences cannot be coped with flexibly.

Moreover, the order of priority for discriminating a disk type is determined after a disk is inserted, and therefore it takes time to read the inserted disk. A disk search is started after a disk is inserted, then the type of the disk medium is selected appropriately, and finally a read operation is started.

### SUMMARY OF THE INVENTION

The present invention is achieved in consideration of the foregoing problems, and an object thereof is to provide a disk reproduction apparatus which can increase the speed of discriminating a disk type and quickly cope with a change in user's preferences, and which requires less time to determine the order of priority of disk type discrimination.

The disk reproduction apparatus of the present invention
according to claim 1 is the one which is capable of reproducing a plurality of types of disk media, and is characterized in that, when a type of a disk medium is discriminated by making a retry because the disk cannot be read at the first time of loading, disk loading is automatically performed until the disk is successfully read, according to an order of priority determined based on a method selected in advance by a user from a plurality of methods of setting the order of priority of disk medium discrimination.

The disk reproduction apparatus of the present invention according to claim 2 is characterized in that, in the disk reproduction apparatus of claim 1, one of the plurality of methods of setting the order of priority of disk medium discrimination is selectable which include a fixing method in which a user presets types of disk media to be discriminated upon a retry and a discriminating order of the disk media, and a historical data method in which the discriminating order is automatically set based on historical data in the order of decreasing frequency of reproduction.

The disk reproduction apparatus according to claim 3 is
characterized in that, in the disk reproduction apparatus of claim 2, the historical data in the historical data method is data obtained according to an addition method in which a weight is assigned to the historical data by incrementing history of a discriminated disk type.

The disk reproduction apparatus according to claim 4 is
characterized in that, in the disk reproduction apparatus of claim 2, the historical data in the historical data method is data obtained according to a calculation method in which a weight is assigned to the historical data by incrementing history of a discriminated disk type and decrementing history of other undiscriminated disk types.

The disk reproduction apparatus according to claim 5 is
characterized in that, in the disk reproduction apparatus of any one of claims 2 to 4, it is possible to select whether the historical data is based on the addition method or the calculation method.

The disk reproduction apparatus according to claim 6 is
characterized in that, in the disk reproduction apparatus of any one of claims 2 to 5, the historical data is accessible by a user to confirm history of disk media.

The disk reproduction apparatus according to claim 7 is
characterized in that in the disk reproduction apparatus of any one of claims 2 to 6, a user is allowed to access and confirm the historical data of disk media, and based on a result of the historical data, the user is allowed to select an appropriate method of setting the order of priority of disk medium discrimination, set types of disk media and the order of priority thereof according to the fixing method, or make settings for the historical data addition method and the historical data calculation method.

### BRIEF DESCRIPTION OF THE DRAWINGS

FIG. 1 is an example of a block diagram of a disk reproduction apparatus according to the present invention.
FIG. 2 is a flowchart showing an example of the first time of disk medium discriminating procedure.
FIG. 3 is a continuation of the flowchart of FIG. 2.
FIG. 4 is a continuation of the flowchart of FIG. 2.
FIG. 5 is a flowchart showing an example of a retry operation according to a fixing method.
FIG. 6 is a flowchart showing an example of a retry operation according to a historical data method.
FIG. 7 is historical data representing one example of weighting according to a calculation method.
FIG. 8 is a flowchart showing an example of a historical data generating procedure.
FIG. 9 is an example of a disk discrimination method setting screen.
FIG. 10 is an example of a user setting screen.
FIG. 11 is an example of a historical data setting screen.
FIG. 12 is an example of a historical data calculation method setting screen.
FIG. 13 is an example of a previous historical data reference screen.

### DETAILED DESCRIPTION OF THE PREFERRED EMBODIMENTS

A preferred embodiment for implementing a disk reproduction apparatus according to the present invention will be described below with reference to the drawings, but the present invention is not limited to this embodiment.

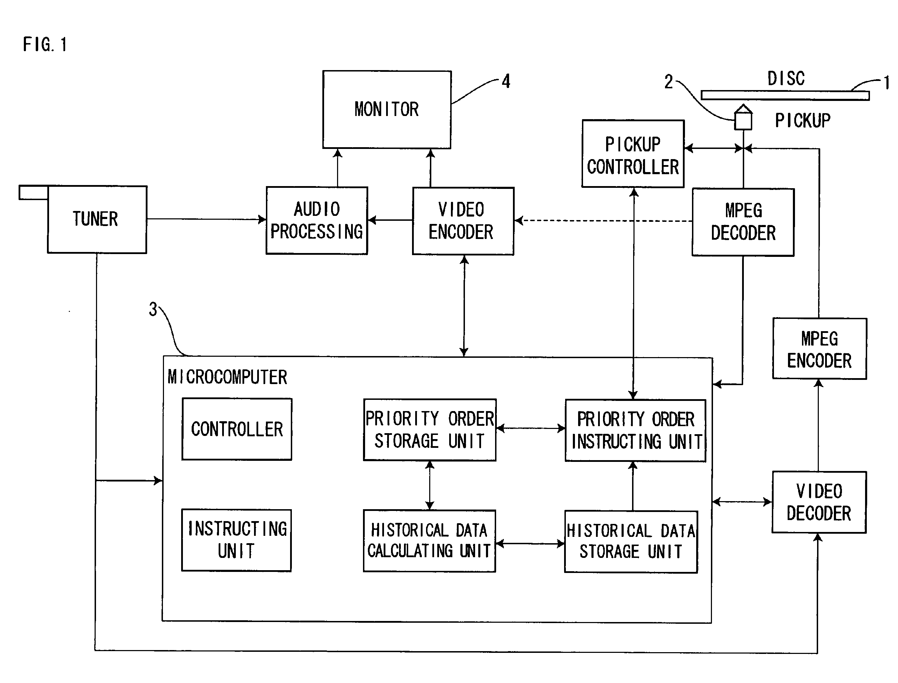

The block diagram in FIG. 1 shows an example of functional configuration of the present invention. By use of a pickup 2, discrimination and reproduction of a disk 1 are performed. A historical data storage unit, a historical data calculating unit, and a priority order storage unit provided in a microcomputer 3 are controlled and instructed by a controller and an instructing unit, respectively. A pickup controller is merely an abstract name, and the pickup can actually be controlled directly by the microcomputer. Data in the historical data storage unit can be displayed on the screen of a monitor 4 in response to a user's instruction.

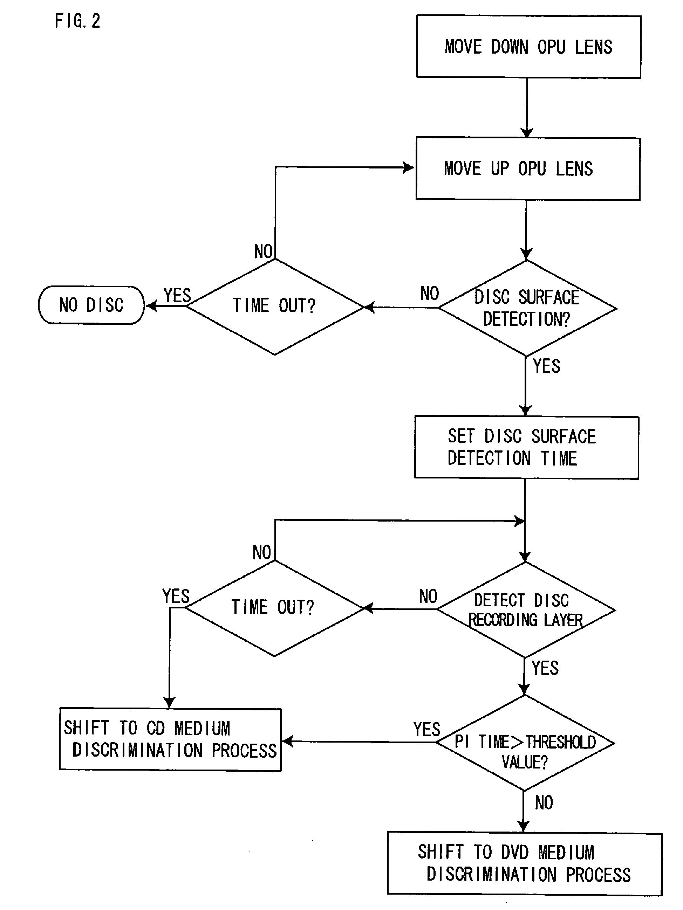

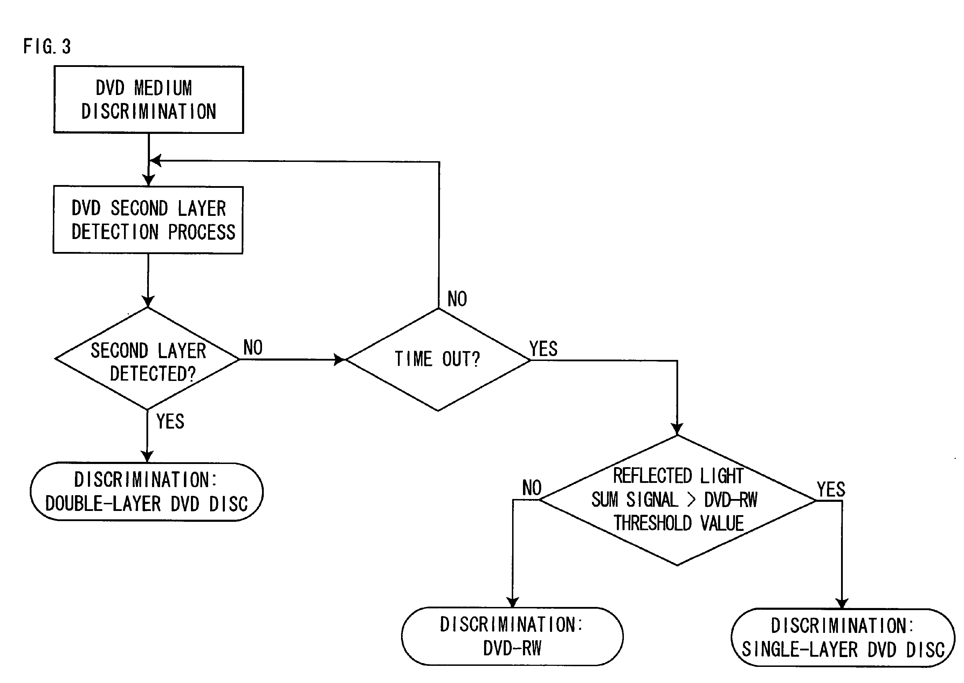

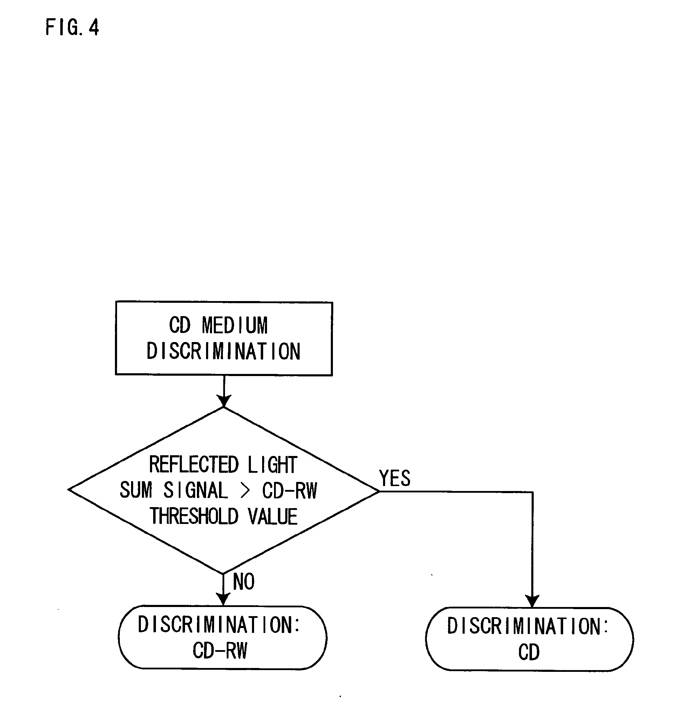

The first time of read operation of a disk medium is made as exemplified in FIG. 2. When the first time of read operation fails, the second and subsequent times of read operations are shifted to a DVD medium discrimination process exemplified in FIG. 3 or a CD medium discrimination process exemplified in FIG. 4. Types of media to be discriminated and a discriminating order thereof at the second and subsequent times of retry operations are set according to a method of the present invention.

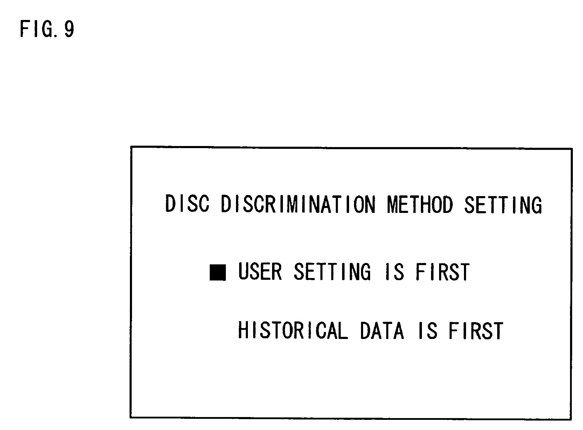

The retry operation of disk discrimination is performed
according to one selected from a fixing method and a historical data method (see FIG. 9). In the fixing method, a user sets in advance the order of priority of disk type discrimination in retry operation. In the historical data method, the order of priority of disk type discrimination in retry operation is determined utilizing weights of historical data (frequency of reproduction). Types of disk formats include a single-layer DVD, double-layer DVD, DVD-R, DVD-RW, CD, CD-R, CD-RW, SACD, DVD-RAM, and all other disk types of recording media.

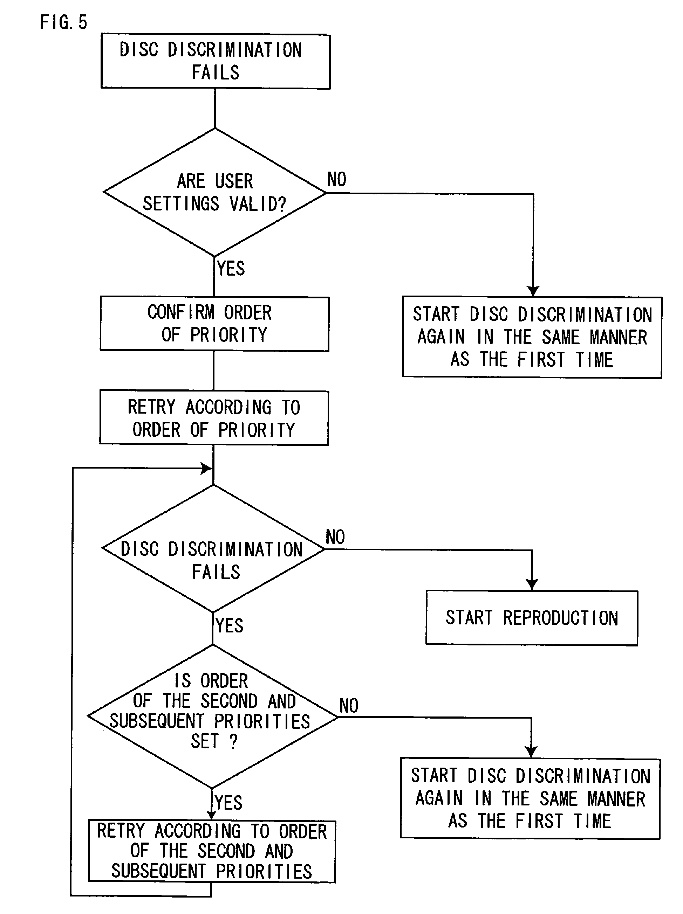

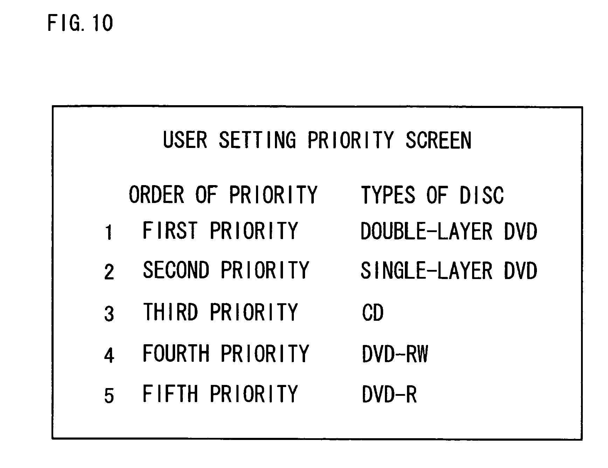

In the fixing method, a user can set the order of priority to disk discrimination means upon retry operation through a menu screen (see FIG. 10). The user raises the priority of a disk medium he/she wants to use preferentially in retry operation. When a disk cannot be discriminated at the first time of disk medium discriminating operation, disk discrimination is retried according to the order of priority of disk media that is set in advance by the user (see FIG. 5). In the case of the setting screen shown in FIG. 10, the order of priority can be set from the first to the fifth disk media, and it is also allowable to set only the first priority medium if there is not any other desired media type. Types of disks are stored in advance in a database.

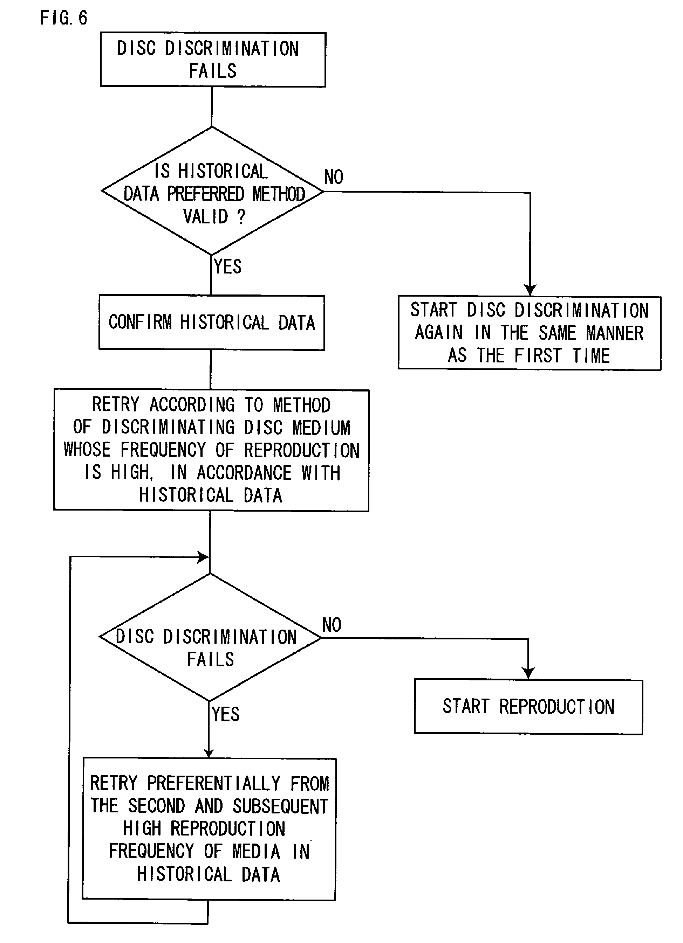

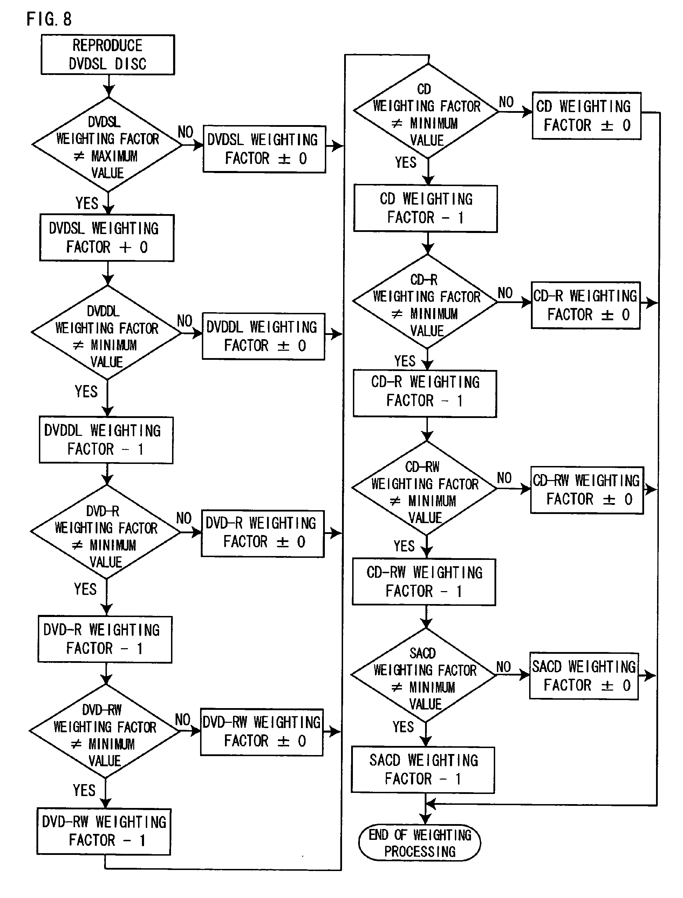

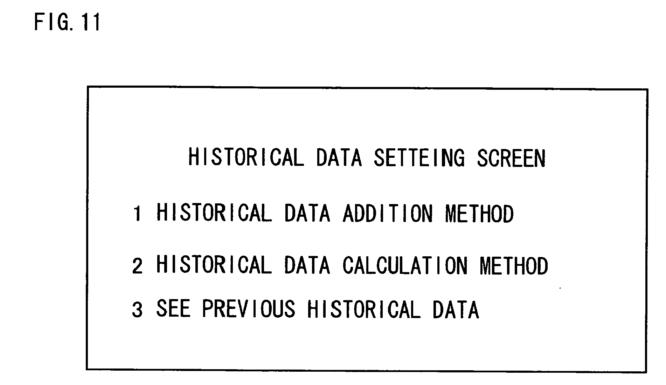

In the historical data method, the order of priority of disk type discrimination in retry operation is determined based on weights of the previous reproduction frequency (see FIG. 6). A user selects, from a menu screen, one of an addition method in which the historical result as to disk discrimination and reproduction is simply incremented and a calculating method in which calculation of increment/decrement is made based on the historical result (see FIG. 11). The historical data method therefore includes two settings of the addition method and calculation method, but these are the same in that disk loading is performed for disk media in the order of decreasing frequency of reproduction when a retry is made. FIG. 8 shows a procedure of generating the historical data, and illustrates an example of historical data in the case where a single-layer DVD (DVDSL) is reproduced. The minimum value described in FIG. 8 means that the number of reproduction of historical data is 0, and if it is less than 0, the minimum value remains 0.

In the historical data addition method, every time a disk medium is selected, the historical data thereof is incremented by one, and a disk medium whose total number of selected times is large is set to a priority disk in retry operation. The history of a disk medium whose type is discriminated and which is then read and reproduced is incremented one by one limitlessly. Or alternatively, it is also allowable to set the maximum value in consideration of memory capacity and to reset when a certain number of times is reached. A disk medium whose number of reproduction remains 0 for a long time is eliminated from the historical data to reduce the volume thereof, and this disk medium is removed from target disk media for confirmation of reproduction frequency of the historical data in order to reduce the number of types of disk media subjected to data processing in retry operation, thereby making it possible to reduce the time required for the retry operation.

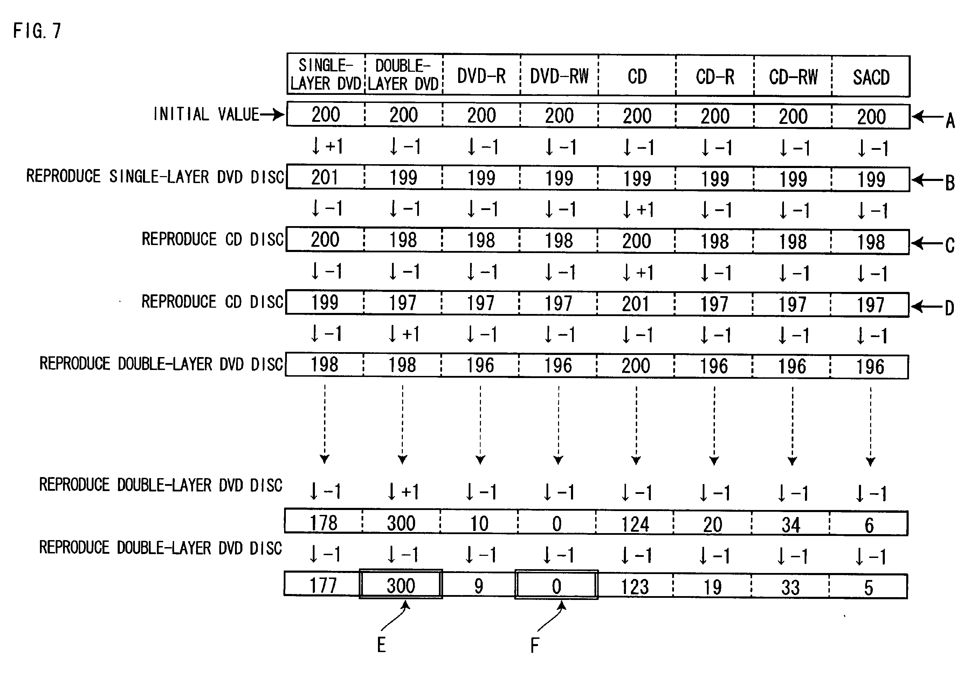

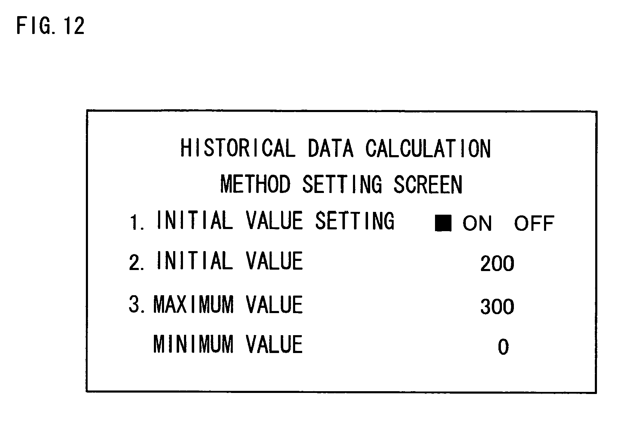

In the historical data calculation method, every time a disk medium is discriminated and reproduced, the historical data thereof is incremented by one, and the historical data of other disk media is decremented by one (see FIG. 7). A method of calculation processing is selectable from a method of starting calculation from 0 and a method of setting an arbitrary value (e.g., 200) and starting calculation therefrom, by tuning an initial value setting on a menu screen ON/OFF (see FIG. 12). When a user sets the initial value to 200, the historical data of all disk media can be initialized at 200 instantly. When the initial value is not set, the calculation is started from 0, and the historical data of a reproduced disk medium is incremented by one. The historical data of other disk media whose number of reproduction is 0 or below remains 0, and the historical data of other disk media whose number of reproduction is 1 or above is decremented by one (see FIG. 7). Settings are made so that, regardless of ON/OFF of the initial value setting, the maximum value and the minimum value of the historical data can be freely set, and that the calculation across the maximum value and the minimum value is not performed. When the initial value is set, a disk medium whose number of reproduction is below an arbitrary value is eliminated from the historical data to reduce the volume thereof, and this disk medium is removed from target disk media for confirmation of reproduction frequency of the historical data so as thereby to reduce the number of types of disk media subjected to data processing in retry operation, thereby making it possible to reduce the time required for the retry operation.

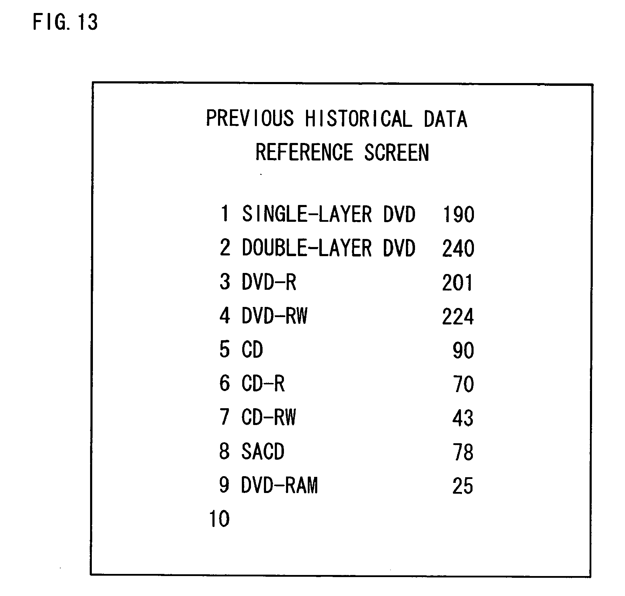

When "see previous historical data" is selected on a setting screen of FIG. 11, a historical data reference screen of FIG. 13 is displayed. All the historical data is stored in the memory of the historical data storage unit. FIG. 13 is an example of the historical data in a state where the initial value is set to 200 according to the historical data calculation method and a certain period of time has elapsed since then.

When a disk inserted for reproduction cannot be read at the first time of loading because the disk is of inferior quality, discrimination means for a retry can be set freely. Since a user is allowed to set in advance a method of setting the order of priority of disk type discrimination when a retry is made, it is not necessary to determine a discriminating order after a disk is inserted, thereby reducing time required for discrimination process. A disk type discriminating method is selectable from the following two methods: a fixing method in which a user can freely set types of disk media and a discriminating order thereof and a historical data method in which disk media are discriminated based on historical data in the order of decreasing frequency of reproduction. Furthermore, the historical data method is selectable from an addition method and a calculation method so as to flexibly cope with user' s preferences or states, so that effective discrimination can be done with appropriate settings. The method of setting the order of priority for disk medium discrimination is selected in advance by a user from the fixing method and historical data method, which eliminates processes which have been done before, such as disk surface detection, single or double-layer detection, and CD or DVD detection, thereby increasing the reading speed.

In particular, according to the fixing method, a user fixes types of disk media and a discriminating order thereof when a retry is made, so that the user can raise the priority of a frequently used disk medium and also lower the priority of a less frequently used disk medium within a range of his/her recognition, which makes it possible to reflect user' s recognition in discrimination process in a retry operation.

In particular, according to the historical data method, the order of priority of disk media when a retry is made is automatically set based on the previous reproduction frequency historical data, so that a retry can be automatically made for each disk medium in the order of decreasing frequency of previous reproduction, regardless of user' s recognition. As the historical data, previous discrimination results are accumulated for each type of disk media. Variations in reproduction frequency are reflected in the historical data by assigning a weight thereto, so that the historical data can be well organized. The well-organized historical data makes it possible to eliminate unnecessary historical data of a less frequency disk medium from the historical data or to remove the less frequency disk medium from target media for a retry, which leads to a reduction in the volume of historical data and to less time required for retry operation due to a decreased number of target media.

Since the historical data can be accessed and confirmed, a user is allowed to see the historical data, so that the historical data can be reflected in user's determination of narrowing down disk media and setting the order of priority thereof according to the fixing method.

The discriminating method includes three options: fixing method; historical data addition method; and historical data calculation method. A user confirms the historical data, selects an appropriate method according to the circumstances, and makes various settings, so that one of those methods which require less processing time can be selected. Although differences are caused depending on operations, all users can reduce the time required for read operation of the disk reproduction apparatus.

## Claims

1. A disk reproduction apparatus capable of reproducing a plurality of types of disk media, **characterized in that**, when a type of a disk medium is discriminated by making a retry because the disk cannot be read at the first time of loading, disk loading is automatically performed until the disk is successfully read, according to an order of priority determined based on a method selected in advance by a user from a plurality of methods of setting the order of priority of disk medium discrimination.

2. The disk reproduction apparatus according to claim 1,
**characterized in that** one of the plurality of methods of setting the order of priority of disk medium discrimination is selectable which include a fixing method in which a user presets types of disk media to be discriminated upon a retry and a discriminating order of the disk media, and a historical data method in which the discriminating order is automatically set based on historical data in an order of decreasing frequency of reproduction.

3. The disk reproduction apparatus according to claim 2,
**characterized in that** the historical data in the historical data method is data obtained according to an addition method in which a weight is assigned to the historical data by incrementing history of a discriminated disk type.

4. The disk reproduction apparatus according to claim 2,
characterize in that the historical data in the historical data method is data obtained according to a calculation method in which a weight is assigned to the historical data by incrementing history of a discriminated disk type and decrementing history of other undiscriminated disk types.

5. The disk reproduction apparatus according to any one of claims 2 to 4, **characterized in that** it is possible to select whether the historical data is based on the addition method or the calculation method.

6. The disk reproduction apparatus according to any one of claims 2 to 5, **characterized in that** the historical data is accessible by a user to confirm history of disk media.

7. The disk reproduction apparatus according to any one of claims 2 to 6, **characterized in that** a user is allowed to access and confirm the historical data of disk media, and based on a result of the historical data, the user is allowed to select an appropriate method of setting the order of priority of disk medium discrimination, set types of disk media and the order of priority thereof according to the fixing method, or make settings for the historical data addition method and the historical data calculation method.
